# EUROPEAN PATENT APPLICATION

(11) **EP 4 787 707 A1**
(43) Date of publication of application: **05.08.2026**
(21) Application number: 24888049.4
(22) Date of filing: 07.11.2024
(51) Int. Cl.: H02S 20/32

(54) **TWO-AXIS TRACKING PHOTOVOLTAIC BRACKET AND PHOTOVOLTAIC DEVICE HAVING FOLDING FUNCTION**

(30) Priority: 09.11.2023 CN 202311491915
(71) Applicant: Shanghai Xingye Materials Technology Co., Ltd, Shanghai 201207 (CN)
(72) Inventor: GAO, Feng, Shanghai 201800 (CN)
(74) Representative: Wang, Bo
(86) International application number: PCT/CN2024/130515
(87) International publication number: WO 2025/098438

(57) **Abstract**

The present disclosure discloses a foldable photovoltaic tracking support, comprising a fixed bracket, a first-stage driving mechanism, and a second-stage driving mechanism. The first-stage driving mechanism is capable of driving the second-stage driving mechanism to rotate around a rotational axis of the first-stage driving mechanism, thereby achieving rotation of a photovoltaic panel around a transverse axis; the second-stage driving mechanism is capable of driving the photovoltaic panel to rotate around a rotational axis of the second-stage driving mechanism, thereby achieving rotation of the photovoltaic panel around a longitudinal axis. A rotating member of the second-stage driving mechanism is fixedly connected to a clutch mechanism; when the clutch mechanism is in a connected state, rotation of the rotating member of the second-stage driving mechanism is capable of driving a first photovoltaic panel and a second photovoltaic panel to rotate synchronously; and when the clutch mechanism is in a disengaged state, the rotation of the rotating member of the second-stage driving mechanism is capable of driving the first photovoltaic panel to rotate relative to the second photovoltaic panel. The photovoltaic apparatus of the present disclosure has both tracking and folding functions. The present disclosure further discloses a foldable photovoltaic tracking apparatus.

## Description

### Technical Field

The present invention disclosure relates to photovoltaic power generation equipment, and specifically relates to a foldable photovoltaic tracking support. The present disclosure further relates to a foldable photovoltaic tracking apparatus.

### Background

As a clean and renewable energy, solar energy has been increasingly applied. Solar photovoltaic power generation equipment uses solar photovoltaic modules as photoelectric conversion devices to convert solar energy into electrical energy, thereby realizing the utilization of solar energy.

Currently, in order to improve the power generation of photovoltaic equipment per unit time, a common method is to increase the size of photovoltaic panels as much as possible. For example, Chinese Utility Model Patent Document CN216122306U discloses a photovoltaic device, which comprises a plurality of photovoltaic panels arranged linearly, thereby increasing the apparent size of the photovoltaic panels, and thus being able to significantly improve the power generation.

Another common method for improving the power generation is to adopt a mode where photovoltaic panels track the sun. This is because the power generation of photovoltaic power generation equipment depends on the amount of solar radiation received by the photovoltaic panels. In order to improve the power generation efficiency of the photovoltaic power generation equipment, it is necessary to make an upper surface of the photovoltaic panel always face the sun directly, so as to ensure that a vertical irradiation area of sunlight is maximized, thereby enhancing photoelectric conversion efficiency. For example, Chinese Invention Patent Document CN106130459B discloses a photovoltaic support for achieving automatic tracking of an optimal incident angle of sunlight. The photovoltaic support possesses an adaptive adjustment function for different latitudes, longitudes, times, and solar terms, ensuring that sunlight irradiates the photovoltaic panel at the optimal incident angle.

Although the photovoltaic support can adjust a tilt angle and an azimuth angle of the photovoltaic panel, its tracking range for the tilt angle is 0° to 110°, and its tracking range for the azimuth angle is -125° to +125°. Obviously, the angle adjustment range of the photovoltaic support is limited. Moreover, the angle adjustment method of the photovoltaic support is not flexible enough.

### SUMMARY

The technical problem to be solved by the present disclosure is to provide a foldable photovoltaic tracking support, which can not only drive a photovoltaic panel to rotate around a transverse axis, but also drive the photovoltaic panel to rotate around a longitudinal axis, thereby flexibly adjusting an angle of the photovoltaic panel and ensuring that sunlight irradiates the photovoltaic panel at an optimal incident angle; furthermore, the apparatus can be folded.

In order to solve the above technical problem, the technical solution for the foldable photovoltaic tracking support of the present disclosure is:

A foldable dual-axis tracking photovoltaic support comprises:
a fixed bracket;
a first-stage driving mechanism, wherein a fixed member and a rotating member of the first-stage driving mechanism are rotatable relative to each other; the fixed member of the first-stage driving mechanism is fixedly connected to the fixed bracket; and
a second-stage driving mechanism, wherein a fixed member and a rotating member of the second-stage driving mechanism are rotatable relative to each other; the fixed member of the second-stage driving mechanism is fixedly connected to the rotating member of the first-stage driving mechanism, and the rotating member of the second-stage driving mechanism is configured to be fixedly connected to a photovoltaic panel;
wherein a rotational axis of the first-stage driving mechanism extends transversely; and a rotational axis of the second-stage driving mechanism extends longitudinally;
wherein the first-stage driving mechanism and/or the second-stage driving mechanism further comprises an intermediate member that is movably connected to the rotating member, wherein a guiding connection is established between the intermediate member and the rotating member via a first guiding structure; the intermediate member is movably connected to the fixed member, and a guiding connection is established between the intermediate member and the fixed member via a second guiding structure.

The present disclosure further provides a foldable photovoltaic tracking apparatus, the technical solution of which is:
It comprises the above-mentioned foldable dual-axis tracking photovoltaic support and a photovoltaic panel, wherein the second-stage driving mechanism of the dual-axis tracking photovoltaic support is connected to the photovoltaic panel;
when the rotating member of the first-stage driving mechanism rotates relative to the fixed member thereof, it is capable of driving the second-stage driving mechanism and the photovoltaic panel fixedly connected thereto to rotate around the rotational axis of the first-stage driving mechanism, thereby achieving rotation of the photovoltaic panel around a transverse axis;
when the rotating member of the second-stage driving mechanism rotates relative to the fixed member thereof, it is capable of driving the photovoltaic panel to rotate around the rotational axis of the second-stage driving mechanism, thereby achieving rotation of the photovoltaic panel around a longitudinal axis.

The technical effects achievable by the present disclosure are:
The photovoltaic apparatus of the present disclosure combines both tracking and folding functions. Therefore, the photovoltaic apparatus of the present disclosure can be installed not only in wilderness and wastelands but also in cities and agricultural lands without changing the nature of land use, thereby solving the installation problem of photovoltaic panels.

Specifically, when the photovoltaic apparatus of the present disclosure is installed on agricultural land, a tracking angle of the photovoltaic panel is adjusted to provide shading according to a light intensity required by vegetation planted on the agricultural land, thereby capable of controlling a lighting duration for the vegetation.

Therefore, on one hand, the present disclosure can solve the problem of restricted installation sites for existing photovoltaic equipment. It expands an installation range of existing photovoltaic equipment from being limited only to wilderness and wastelands to being installable on all lands without affecting an original agricultural planting function of the land. This is of great significance to the cultivated land protection policy of "guarding the red line of 1.8 billion mu of arable land".

On the other hand, when the present disclosure is installed on agricultural land, it can not only convert solar energy into electrical energy for utilization but also improve agricultural economic efficiency. Specifically, when the photovoltaic panel is folded and retracted, it can provide sufficient sunlight to plants; and when the photovoltaic panel is expanded, it can generate electricity. For shade-loving crops, when the photovoltaic panel is expanded, it can further provide shade for the plants, form protection for the plants, reduce water evaporation, optimize a crop growth environment, and increase agricultural yields.

At night when photovoltaic tracking is not needed, making the photovoltaic panel fold against the upright column can minimize damage to the upright column and other parts caused by the expansion of the photovoltaic panel. It reduces leverage force, reduces pressure on the bracket and the base, and makes the equipment more reliable.

### BRIEF DESCRIPTION OF THE DRAWINGS

It should be understood by those skilled in the art that the following description is merely illustrative of the principles of the present disclosure, and said principles may be applied in various ways to achieve many different alternative embodiments. These descriptions are only used to illustrate the general principles of the teachings of the present disclosure and are not meant to limit the inventive concepts disclosed herein.

The accompanying drawings, which are incorporated in and constitute a part of this specification, illustrate embodiments of the present disclosure and, together with the general description given above and the detailed description of the embodiments given below, serve to explain the principles of the present disclosure.

The present disclosure will be described in further detail below with reference to the accompanying drawings and specific embodiments:
FIG. 1 is a perspective view of a first embodiment of a foldable photovoltaic tracking apparatus of the present disclosure;
FIG. 2 is an exploded view of the first embodiment of the foldable photovoltaic tracking apparatus of the present disclosure;
FIG. 3 is a schematic connection view of a second-stage driving mechanism and a trigger member of the present disclosure;
FIG. 4 is an exploded view of the second-stage driving mechanism and the trigger member of the present disclosure;
FIG. 5 is an exploded view of a first embodiment of a drive mechanism of the present disclosure;
FIG. 6 is a partial enlarged view of a helical rod of the present disclosure;
FIG. 7 is a perspective view of a second embodiment of the drive mechanism of the present disclosure;
FIG. 8 is an exploded view of the second embodiment of the drive mechanism of the present disclosure;
FIG. 9 is a perspective view of an embodiment of a clutch mechanism of the present disclosure;
FIG. 10 is a sectional view of the embodiment of the clutch mechanism of the present disclosure;
FIG. 11 is an exploded view of the embodiment of the clutch mechanism of the present disclosure;
FIG. 12 is a perspective view of a second embodiment of the foldable photovoltaic tracking apparatus of the present disclosure, wherein a photovoltaic panel is in an expanded state;
FIG. 13 is a perspective view of the second embodiment of the foldable photovoltaic tracking apparatus of the present disclosure, wherein a first photovoltaic panel assembly is in a folded and retracted state;
FIG. 14 is a perspective view of the second embodiment of the foldable photovoltaic tracking apparatus of the present disclosure, wherein both sets of photovoltaic panel assemblies are in a folded and retracted state;
FIG. 15 is a perspective view of a second embodiment of a T-shaped structure of the present disclosure; and
FIG. 16 is an exploded view of the second embodiment of the T-shaped structure of the present disclosure.

### Description of Reference Numerals in the Drawings:

1 housing
2 Bearing
3 fixed member
4 moving member
5 Return spring
6 End cap
7 Lever
8 Bolt
9 Bolt
100 First photovoltaic panel
200 Second photovoltaic panel
301 second-stage driving mechanism
400 first-stage driving mechanism
500 fixed bracket
600 upright column
700 Third photovoltaic panel
800 Fourth photovoltaic panel
901 Second first-stage driving mechanism
900 Second second-stage driving mechanism
501 Lower support member
502 Upper support member
503 First connecting arm
504 Second connecting arm
401 First photovoltaic panel connector
402 Second photovoltaic panel connector
101 First connecting ring of the first photovoltaic panel
102 Second connecting ring of the first photovoltaic panel
201 First connecting ring of the second photovoltaic panel
202 Second connecting ring of the second photovoltaic panel
302 first clutch mechanism
303 Second clutch mechanism
304 First pull rod
305 Second pull rod
306 Trigger member
3061 Two wings of the trigger member
3062 Triggering portion of the trigger member
1-1 Groove
4-1 Protrusion
6-1 Positioning groove
11 helical rod
12 sliding sleeve
13 Mounting base
14 lead screw
15 lead screw nut
16 Housing
17 First bearing
18 Second bearing
1101 Two ends of the helical rod
1102 helical protrusion
1201 Guiding groove
1202 Helical groove
1203 Positioning hole for lead screw nut
1601 Guiding protrusion
301-11 Straight guiding rod
301-12 sliding sleeve
301-14 lead screw
301-15 lead screw nut
301-16 Outer sleeve
301-18 Bearing
301-1101 Guiding groove
301-1201 Threaded hole of the sliding sleeve
301-1501 Threaded hole of the lead screw nut
301-1601 Helical groove.

### DETAILED DESCRIPTION

In order to make the objectives, technical solutions, and advantages of the embodiments of the present disclosure clearer, the technical solutions in the embodiments of the present disclosure will be described clearly and completely below with reference to the accompanying drawings. Obviously, the described embodiments are only a part of the embodiments of the present disclosure, rather than all of them. Based on the described embodiments of the present disclosure, all other embodiments obtained by those of ordinary skill in the art without creative efforts shall fall within the protection scope of the present disclosure. Unless otherwise defined, technical or scientific terms used herein shall have the common meanings understood by those with ordinary skills in the field to which the present disclosure belongs. The terms "first", "second", and similar words used herein do not denote any order, quantity, or importance, but are merely used to distinguish different components. The terms "comprising", "including", and similar words mean that an element or object appearing before the word covers the elements or objects listed after the word and their equivalents, without excluding other elements or objects. The terms "connected", "interconnected", and similar words are not limited to physical or mechanical connections, but may include electrical connections, whether direct or indirect. "Upper", "lower", "left", "right", etc., are only used to represent relative positional relationships; when the absolute position of the described object changes, the relative positional relationship may also change accordingly.

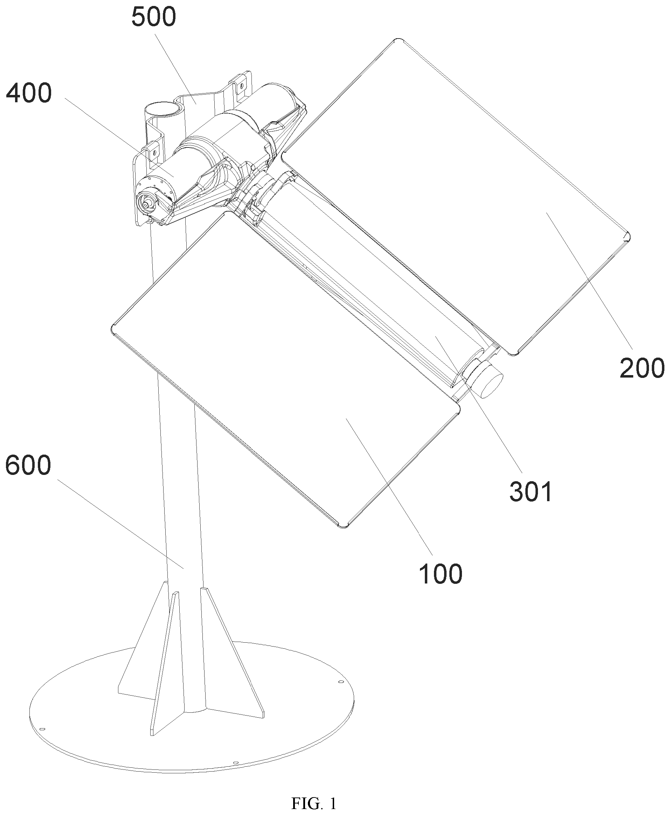

As shown in FIG. 1, which illustrates a first embodiment of the foldable photovoltaic tracking apparatus of the present disclosure, the dual-axis tracking photovoltaic apparatus comprises an upright column 600, a first photovoltaic panel 100, and a second photovoltaic panel 200. The upright column 600 extends vertically, and an upper end of the upright column 600 is fixedly connected to the fixed bracket 500. A first-stage driving mechanism 400 is fixedly connected to one side of the fixed bracket 500, and a rotational axis of the first-stage driving mechanism 400 extends transversely. The first-stage driving mechanism 400 is connected to a second-stage driving mechanism 301, and a rotational axis of the second-stage driving mechanism 301 extends longitudinally. The first-stage driving mechanism300 and the second-stage driving mechanism 400 form a T-shaped structure. An inner side edge of the first photovoltaic panel 100 is fixedly connected to one side of the second-stage driving mechanism 301, and an inner side edge of the second photovoltaic panel 200 is fixedly connected to the other side of the second-stage driving mechanism 301.

The first-stage driving mechanism 400 has a housing 16 and a helical rod 11, and the helical rod 11 is capable of achieving relative rotation with the housing 16. The first-stage driving mechanism 400 is capable of driving the second-stage driving mechanism 301 and the first photovoltaic panel 100 and the second photovoltaic panel 200 fixedly connected thereto to rotate around the rotational axis of the first-stage driving mechanism 400 (i.e., the transverse axis).

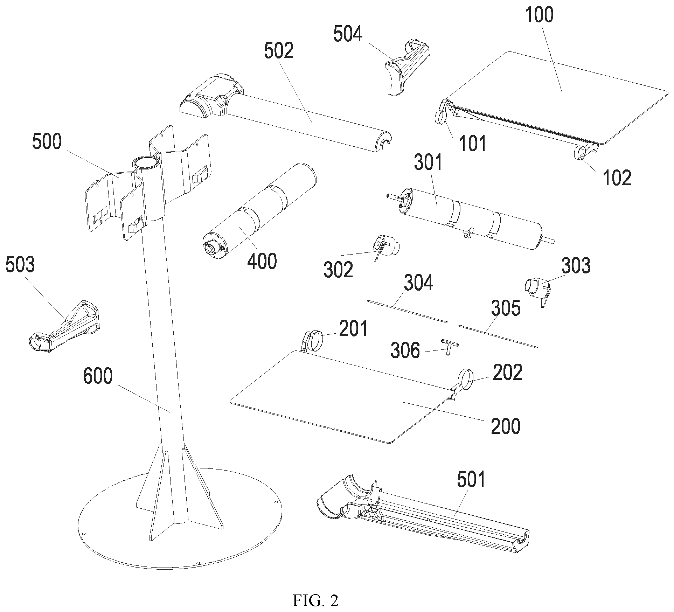

Specifically, as shown in FIG. 2, the housing 16 of the first-stage driving mechanism 400 is fixedly connected to the fixed bracket 500. A lower portion of the housing 16 is movably connected to one end of a lower support member 501, and an upper portion of the housing 16 is movably connected to one end of an upper support member 502. The upper support member 502 and the lower support member 501 constitute a fixed cover of the transmission mechanism. One end of the fixed cover of the transmission mechanism wraps a middle portion of the housing 16 therein, and the fixed cover of the transmission mechanism is rotatable relative to the housing 16. The other end of the fixed cover of the transmission mechanism wraps the second-stage driving mechanism 301 therein, thereby achieving a movable connection between the second-stage driving mechanism 301 and the housing 16 of the first-stage driving mechanism 400.

A first output end of the helical rod 11 of the first-stage driving mechanism 400 is fixedly connected to one end of a first connecting arm 503, and the other end of the first connecting arm 503 is fixedly connected to the lower support member 501 and/or the upper support member 502. A second output end of the helical rod 11 of the first-stage driving mechanism 400 is fixedly connected to one end of a second connecting arm 504, and the other end of the second connecting arm 504 is fixedly connected to the lower support member 501 and/or the upper support member 502. Through the first connecting arm 503 and the second connecting arm 504, a fixed connection between the helical rod 11 of the first-stage driving mechanism 400 and the second-stage driving mechanism 301 is achieved.

When the helical rod 11 of the first-stage driving mechanism 400 rotates relative to its housing 16, the first-stage driving mechanism 400 is capable of driving the second-stage driving mechanism 301 to rotate relative to the housing 16 and the upright column 600 fixedly connected to the housing 16, thereby achieving rotation of the first photovoltaic panel 100 and the second photovoltaic panel 200 around the transverse axis.

The structure of the second-stage driving mechanism 301 is identical to that of the first-stage driving mechanism 400. The second-stage driving mechanism 301 is capable of driving the first photovoltaic panel 100 and the second photovoltaic panel 200 to rotate around the rotational axis of the second-stage driving mechanism 301 (i.e., the longitudinal axis).

Specifically, the housing 16 of the second-stage driving mechanism 301 is fixedly connected to the fixed cover of the transmission mechanism composed of the upper support member 502 and the lower support member 501. A first output end of the helical rod 11 of the second-stage driving mechanism 301 is fixedly connected to a first clutch mechanism 302, and a second output end of the helical rod 11 of the second-stage driving mechanism 301 is fixedly connected to a second clutch mechanism 303. The first clutch mechanism 302 is fixedly connected to a first connecting ring 101 of the first photovoltaic panel 100 and a first connecting ring 201 of the second photovoltaic panel 200. The second clutch mechanism 303 is fixedly connected to a second connecting ring 102 of the first photovoltaic panel 100 and a second connecting ring 202 of the second photovoltaic panel 200, thereby achieving a connection between the helical rod 11 of the second-stage driving mechanism 301 and the first photovoltaic panel 100 and the second photovoltaic panel 200.

When the helical rod 11 of the second-stage driving mechanism 301 rotates relative to its housing 16, the second-stage driving mechanism 301 is capable of driving the first photovoltaic panel 100 and the second photovoltaic panel 200 to rotate relative to the housing 16 of the second-stage driving mechanism 301 and the fixed cover of the transmission mechanism fixedly connected to the housing 16, thereby achieving rotation of the first photovoltaic panel 100 and the second photovoltaic panel 200 around the longitudinal axis.

The first-stage driving mechanism 400 of the present disclosure can drive the photovoltaic panels to rotate around the transverse axis, and the second-stage driving mechanism 301 can drive the photovoltaic panels to rotate around the longitudinal axis. By separately controlling the first-stage driving mechanism 400 and the second-stage driving mechanism 301, the angle of the photovoltaic panels can be adjusted as needed, thereby ensuring that sunlight irradiates the photovoltaic panels at an optimal incident angle to improve photoelectric conversion efficiency.

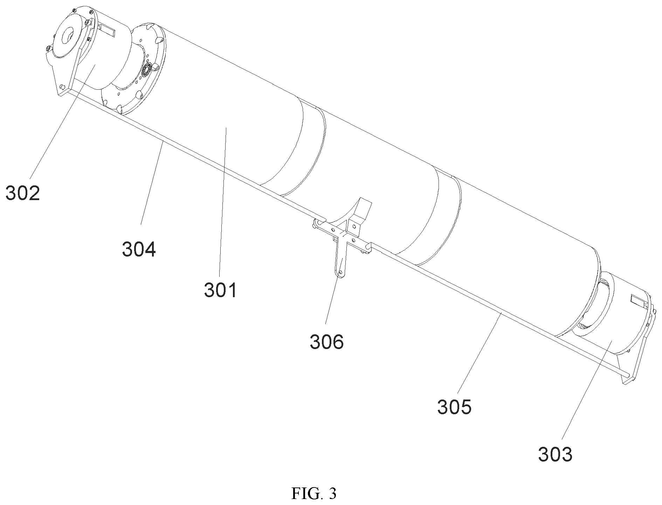

As shown in FIG. 3, the first clutch mechanism 302 is connected to one end of a first pull rod 304, and the second clutch mechanism 303 is connected to one end of a second pull rod 305. The other ends of the first pull rod 304 and the second pull rod 305 are connected to the same trigger member 306. The trigger member 306 has a triggering portion and two connecting portions respectively for the first pull rod 304 and the second pull rod 305. When the triggering portion is subjected to a force, it can simultaneously transmit an external force to the first pull rod 304 and the second pull rod 305 through the connecting portions.

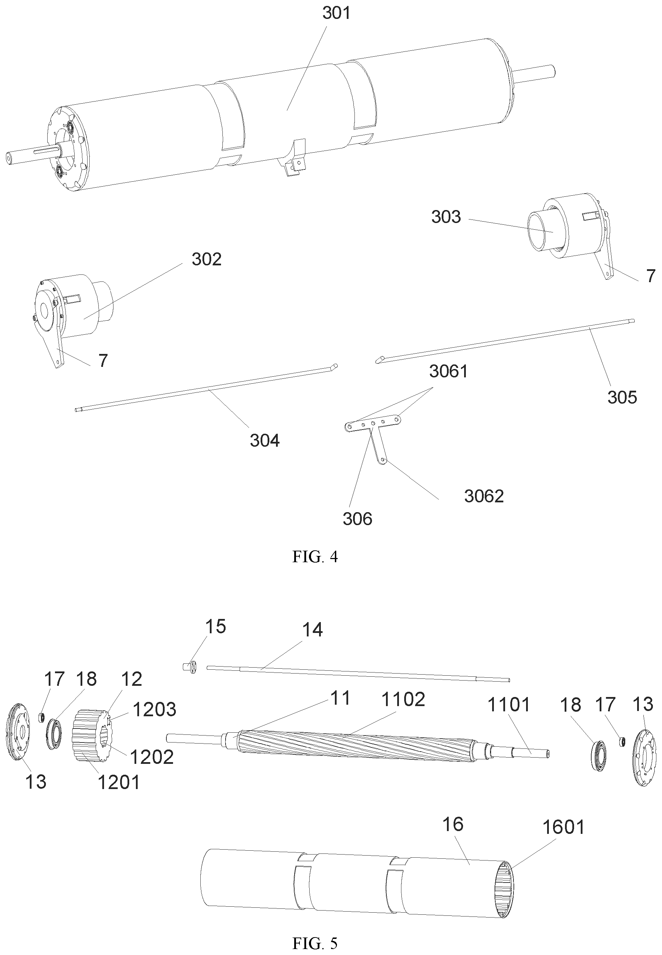

Preferably, the trigger member 306 has a T-shaped structure. Two wings 3061 of the trigger member 306 serve as the connecting portions, and a triggering portion 3062 of the trigger member 306 forms a protrusion in a direction away from the second-stage driving mechanism 301, as shown in FIG. 4.

Specifically, the first clutch mechanism 302 has a fixed member 3 and a moving member 4. The moving member 4 is capable of performing a translational movement relative to the fixed member 3 to switch its clutch state. When the moving member 4 is close to the fixed member 3 and forms a drive connection with the fixed member 3, the clutch mechanism is in a connected state. When the moving member 4 is away from the fixed member 3 and disengages from the drive connection with the fixed member 3, the clutch mechanism is in a disengaged state.

The structure of the second clutch mechanism 303 is identical to that of the first clutch mechanism 302, and will not be repeated here.

The first clutch mechanism 302 and the second clutch mechanism 303 are fixedly connected to two ends of the helical rod 11 via their respective fixed members 3. That is, the first clutch mechanism 302 is connected to one end of the helical rod 11 via its fixed member 3, and the second clutch mechanism 303 is connected to the other end of the helical rod 11 via its fixed member 3. When the first clutch mechanism 302 and the second clutch mechanism 303 are in a connected state, rotation of the helical rod 11 can drive the fixed members 3 and the moving members 4 of the first clutch mechanism 302 and the second clutch mechanism 303 to rotate synchronously. When the first clutch mechanism 302 and the second clutch mechanism 303 are in a disengaged state, rotation of the helical rod 11 can drive the fixed members 3 of the first clutch mechanism 302 and the second clutch mechanism 303 to rotate relative to the moving members 4.

The structures of the first-stage driving mechanism 400 and the second-stage driving mechanism 301 of the present disclosure are identical, and the drive mechanism as shown in FIG. 5 may be adopted. As a first embodiment of the drive mechanism of the present disclosure, the drive mechanism comprises a helical rod 11 (serving as a rotating member), and two ends 1101 of the helical rod 11 serve as output ends of the drive mechanism. The output ends of the first-stage driving mechanism 400 are configured to connect the first connecting arm 503 and the second connecting arm 504, and the output ends of the second-stage driving mechanism 301 are configured to connect the first clutch mechanism 302 and the second clutch mechanism 303. A sliding sleeve 12 (serving as an intermediate member) is movably sleeved on the helical rod 11.

The sliding sleeve 12 defines a through hole, and the sliding sleeve 12 is sleeved on the helical rod 11 via the through hole. A helical protrusion 1102 extending helically around an axis of the helical rod 11 is formed on an outer peripheral surface of the helical rod 11, and a helical groove 1202 adapted to the helical protrusion 1102 is formed on an inner wall of the through hole of the sliding sleeve 12. The helical protrusion 1102 and the helical groove 1202 constitute a helical guiding structure. Through the engagement between the helical groove 1202 and the helical protrusion 1102, a helical guiding connection between the sliding sleeve 12 and the helical rod 11 is achieved.

The helical guiding structure between the sliding sleeve 12 and the helical rod 11 may also adopt other structures capable of generating a helical guiding effect. For example, the helical groove may be provided on the outer peripheral surface of the helical rod 11, and the helical protrusion may be provided on the inner wall of the through hole of the sliding sleeve 12; or, a first helical groove may be provided on the inner wall of the through hole of the sliding sleeve 12, a second helical groove may be provided on the outer peripheral surface of the helical rod 11, and a plurality of balls may be provided between the first helical groove and the second helical groove, which can likewise achieve the helical guiding connection between the sliding sleeve 12 and the helical rod 11.

The sliding sleeve 12 is connected to a transmission member. The transmission member comprises a driving member connected to a power source, and a driven member fixedly connected to the sliding sleeve 12. Driven by the power source, the driving member drives the driven member, thereby driving the sliding sleeve 12 to perform a linear movement along an axial direction of the helical rod 11.

Specifically, a lead screw nut positioning hole 1203 is defined in the sliding sleeve 12, and a lead screw nut 15 (driven member) is disposed through the lead screw nut positioning hole 1203. The lead screw nut 15 is fixedly connected to the sliding sleeve 12 via a plurality of bolts.

The lead screw nut 15 defines an internal threaded hole, and the lead screw nut 15 is movably connected to a lead screw 14 (driving member) via the internal threaded hole.

Two ends of the lead screw 14 are connected to a mounting base 13 via first bearings 17, respectively. The lead screw 14 is capable of performing a rotational movement relative to the fixedly arranged mounting base 13. One end of the lead screw 14 serves as an input end of the drive mechanism and is connected to the power source. The power source may be an electric-driven motor, a compressed-air-driven pneumatic cylinder, or a liquid-driven hydraulic cylinder, etc.

Two ends of the helical rod 11 are movably connected to the mounting base 13 via second bearings 18, respectively; and the helical rod 11 is rotatable relative to the fixedly arranged mounting base 13.

A housing 16 (serving as a fixed member) is provided to cover an exterior of the helical rod 11.

A first axial guiding structure extending axially is formed on an outer peripheral surface of the sliding sleeve 12, and a second axial guiding structure adapted to the first axial guiding structure is provided on the housing 16; the first axial guiding structure and the second axial guiding structure engage with each other.

Specifically, a guiding groove 1201 extending axially is formed on the outer peripheral surface of the sliding sleeve 12 as the first axial guiding structure, and a guiding protrusion 1601 adapted to the guiding groove 1201 of the sliding sleeve 12 is formed on an inner wall of the housing 16 as the second axial guiding structure; through an engagement between the guiding groove 1201 and the guiding protrusion 1601, a movable connection between the sliding sleeve 12 and the housing 16 is achieved.

Certainly, it is also possible that the first axial guiding structure is a guiding protrusion and the second axial guiding structure is a guiding groove; or, the first axial guiding structure and the second axial guiding structure are both guiding grooves, and a plurality of intermediate members, such as balls, are provided between the first axial guiding structure and the second axial guiding structure to form a guiding engagement, which can likewise achieve the movable connection between the sliding sleeve 12 and the housing 16.

The working principle of the drive mechanism of the present disclosure is as follows:
A power source (such as a motor) drives the lead screw 14 to rotate, and the rotation of the lead screw 14 drives the lead screw nut 15 to perform a translational movement along an axial direction of the lead screw 14; the lead screw nut 15 drives the sliding sleeve 12 to translate along an axial direction of the helical rod 11, and during the translation process, the sliding sleeve 12 drives the helical rod 11 to rotate around its own rotational axis through a guiding engagement between the helical groove 1202 and the helical protrusion 1102, thereby achieving a small-angle rotation of the helical rod 11.

Since the sliding sleeve 12 is movably connected to the housing 16 through the engagement between the guiding groove 1201 and the guiding protrusion 1601, the translational movement of the sliding sleeve 12 driven by the lead screw nut 15 is guided by the guiding groove 1201 and the guiding protrusion 1601, so as to prevent the rotation of the helical rod 11 from affecting the linear movement of the sliding sleeve 12.

Through the power source, the present disclosure can achieve the rotation of the helical rod 11 within a small angle range (for example, not exceeding 360°). A maximum rotational angle of the helical rod 11 depends on a magnitude of a helical angle of the helical protrusion 1102 of the helical rod 11 and a length of the helical rod 11. By adjusting the magnitude of the helical angle of the helical protrusion 1102 and the length of the helical rod 11, the small-angle rotation of the helical rod 11 within a range not exceeding 180° can be achieved.

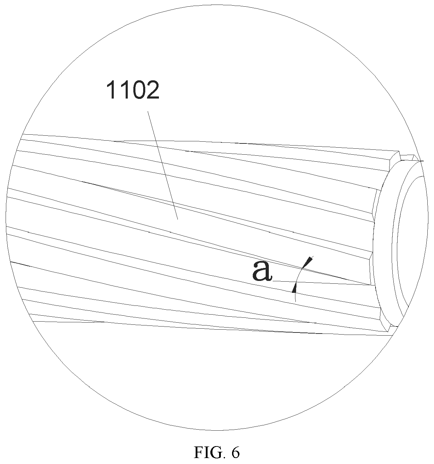

Preferably, a helical angle of the helical guiding structure does not exceed 40°; wherein the helical angle of the helical guiding structure refers to an angle a between the helical guiding structure (i.e., the helical protrusion 1102) and a rotational axis of the helical rod 11, as shown in FIG. 6.

Since the helical angle does not exceed 40°, when the helical rod 11 of the present disclosure needs to rotate, the lead screw 14 is driven by the power source to rotate, and the rotation of the lead screw 14 can easily drive the lead screw nut 15 and the sliding sleeve 12 to perform a translational movement along the axis of the helical rod 11, thereby driving the helical rod 11 to rotate. The present disclosure can achieve low-speed rotation of the helical rod 11 without a reduction mechanism.

During use, when the photovoltaic panel applies torque to the helical rod 11 under the action of an external force (for example, a massive torque applied to the helical rod 11 caused by strong wind blowing toward the photovoltaic panel), the helical rod 11 transmits the external force to the sliding sleeve 12. Since a helical guiding connection is established between the helical rod 11 and the sliding sleeve 12 through the engagement between the helical protrusion 1102 and the helical groove 1202, it can be seen from force analysis that the helical rod 11 applies an axial thrust along the axis of the helical rod 11 and a circumferential thrust along the circumferential direction of the helical rod 11 to the sliding sleeve 12, causing the sliding sleeve 12 to have a tendency of movement to translate along the axial direction and rotate along the circumferential direction under the action of the axial thrust.

However, due to the guiding engagement formed by the guiding groove 1201 and the guiding protrusion 1601, the sliding sleeve 12 can only perform linear movement relative to the housing 16 along the axis of the helical rod 11 and cannot rotate. Therefore, the circumferential thrust exerted on subjected to the sliding sleeve 12 along the circumferential direction of the helical rod 11 is directly transmitted to the housing 16, that is, transmitted to a component used for fixing the housing 16.

Meanwhile, during the process where the power source drives the lead screw 14 to rotate, the lead screw 14 can provide a holding force to the sliding sleeve 12 through the lead screw nut 15, thereby counteracting the axial thrust exerted on the sliding sleeve 12 along the axial direction of the helical rod 11.

Under the joint action of the housing 16 and the power source, the drive mechanism of the present disclosure can avoid abnormal movement of the sliding sleeve 12 relative to the helical rod 11 when encountering strong wind during operation, thereby avoiding abnormal rotation of the helical rod 11 caused by strong wind.

Therefore, the helical rod 11 of the present disclosure has a better ability to resist external forces, and its rotational state will not be affected by external forces.

More preferably, a helical angle of the helical guiding structure is greater than 5° and less than 25°.

Obviously, the smaller the helical angle, the smaller the axial thrust along the axial direction of the helical rod 11. In this case, only a power source with lower power is needed to keep the helical rod 11 stationary, so as to prevent the helical rod 11 from being driven to rotate by the torque from an external load.

Furthermore, when the helical angle is sufficiently small, the helical rod 11 can be kept stationary without any power source. At this time, the axial thrust along the axial direction of the helical rod 11 decomposed from the external force is equal to the friction force between the guiding groove 1201 and the guiding protrusion 1601.

When the diameter of the helical rod 11 is 50 mm, the following data are measured through a finite number of experiments at different angles under the condition that the degrees of the helical angle of the helical guiding structure are different:

When the helical angle is 40 degrees, and an acting force of 1000 N is applied to the helical rod 11, the acting force required to be provided along the axial direction of the helical rod 11 to keep the helical rod 11 stationary is about 850 N; whereas the thrust required to be provided along the axial direction of the helical rod 11 to drive a load of 1000 N is about 1200 N.

When the helical angle is 28 degrees, and an acting force of 1000 N is applied to the helical rod 11, the acting force required to be provided along the axial direction of the helical rod 11 to keep the helical rod 11 stationary is about 500 N; whereas the thrust required to be provided along the axial direction of the helical rod 11 to drive a load of 1000 N is about 680 N.

When the helical angle is 18 degrees, and an acting force of 1000 N is applied to the helical rod 11, the acting force required to be provided along the axial direction of the helical rod 11 to keep the helical rod 11 stationary is about 310 N; whereas the thrust required to be provided along the axial direction of the helical rod 11 to drive a load of 1000 N is about 450 N.

When the helical angle is 14 degrees, and an acting force of 1000 N is applied to the helical rod 11, the acting force required to be provided along the axial direction of the helical rod 11 to keep the helical rod 11 stationary is about 230 N; whereas the thrust required to be provided along the axial direction of the helical rod 11 to drive a load of 1000 N is about 320 N.

When the helical angle is 10 degrees, and an acting force of 1000 N is applied to the helical rod 11, the acting force required to be provided along the axial direction of the helical rod 11 to keep the helical rod 11 stationary is about 150 N; whereas the thrust required to be provided along the axial direction of the helical rod 11 to drive a load of 1000 N is about 210 N.

When the helical angle is 5 degrees, and an acting force of 1000 N is applied to the helical rod 11, the acting force required to be provided along the axial direction of the helical rod 11 to keep the helical rod 11 stationary is about 75 N; whereas the thrust required to be provided along the axial direction of the helical rod 11 to drive a load of 1000 N is about 110 N.

It is clearly known from the above experimental data that the smaller the helical angle, the lower the power required for the power source to drive a load of the same weight, and meanwhile, the lower the power required for the power source to keep the helical rod 11 from rotating relative to the sliding sleeve 12.

Therefore, the present disclosure can significantly reduce the power requirements for the power source of the drive mechanism. Only a motor with lower power is needed to maintain the posture of the photovoltaic panel, thereby keeping the upper surface of the photovoltaic panel in a posture directly facing the sun.

This is specifically manifested in: the self-weight of the photovoltaic panel is transmitted through the housing 16 via the sliding sleeve 12 to the helical rod 11, and then to the lead screw 14. Since an axial guiding structure is provided between the housing 16 and the sliding sleeve 12, and a helical guiding structure is provided between the sliding sleeve 12 and the helical rod 11, the two guiding structures can disperse the self-weight of the photovoltaic panel, thereby avoiding a direct impact of the self-weight of the photovoltaic panel on the lead screw 14. When the photovoltaic panel stops rotating, the two guiding structures can maintain the working posture of the photovoltaic panel (the posture shown in FIG. 1). Therefore, the power of the power source only needs to be sufficient to drive the helical rod 11 to rotate, thereby reducing the power requirements for the power source.

Similarly, when the photovoltaic panel is subjected to an external force (for example, in strong wind), the external force applied to the photovoltaic panel is transmitted through the housing 16 via the sliding sleeve 12 to the helical rod 11, and then to the lead screw 14. Therefore, the external force likewise will not have a direct impact on the lead screw 14.

Further, since the helical angle of the helical guiding structure does not exceed 40°, and especially when the helical angle is greater than 5° and less than 25°, the helical guiding structure can significantly reduce the force transmitted to the lead screw 14, i.e., the force transmitted to the power source will be significantly reduced. The lead screw 14 only needs a small amount of additional power to counteract the external force to maintain its original working posture, thereby further reducing the power requirements for the power source; that is, only a motor with lower power is required to resist the external force.

In severe weather or special circumstances, the first-stage driving mechanism 400 and the second-stage driving mechanism 301 can be controlled to fold the photovoltaic panels, so as to reduce the overall impact of wind or other conditions on the photovoltaic panels, reduce wind resistance, and lower the risk of damage to the equipment caused by wind force, making the equipment more durable. In the folded state, snow accumulation on the photovoltaic panels can also be avoided, and the power generation attenuation rate is reduced, making the equipment more durable.

The feature of the first embodiment of the drive mechanism is that a helical guiding structure is provided between the sliding sleeve and the helical rod, and an axial guiding structure is provided between the sliding sleeve and the housing.

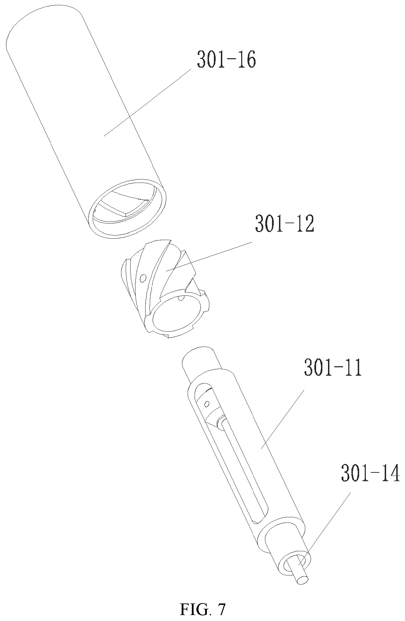

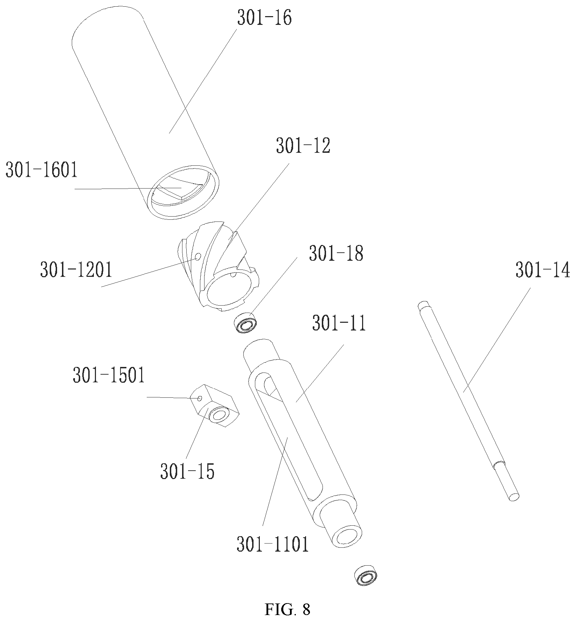

As shown in FIG. 7 and FIG. 8, as a second embodiment of the drive mechanism of the present disclosure, the drive mechanism comprises a straight guiding rod 301-11. A lead screw 301-14 is disposed through the straight guiding rod 301-11, and two ends of the lead screw 301-14 are connected to the straight guiding rod 301-11 via bearings 301-18. One end of the lead screw 301-14 serves as an input end of the drive mechanism and is connected to a power source. The lead screw 301-14 is rotatable relative to the straight guiding rod 301-11. The straight guiding rod 301-11 defines a guiding groove 301-1101 extending axially. A lead screw nut 301-15 is movably provided in the guiding groove 301-1101. The lead screw nut 301-15 is movably sleeved on the lead screw 301-14.

The lead screw nut 301-15 is fixedly connected to a sliding sleeve 301-12 via set screws. Threaded holes 301-1501 are defined in the lead screw nut 301-15, and threaded holes 301-1201 are defined in the sliding sleeve 301-12, for passing the set screws therethrough.

The sliding sleeve 301-12 is movably provided in an outer sleeve 301-16. A helical protrusion extending helically around an axis of the sliding sleeve is formed on an outer peripheral surface of the sliding sleeve 301-12, and a helical groove 301-1601 adapted to the helical protrusion is formed on an inner wall of a through hole of the outer sleeve 301-16. The helical protrusion and the helical groove 301-1601 constitute a helical guiding structure. Through an engagement between the helical protrusion and the helical groove 301-1601, a helical guiding connection between the sliding sleeve 301-12 and the outer sleeve 301-16 is achieved.

The working principle of the second embodiment of the drive mechanism is as follows:
The power source drives the lead screw 301-14 to rotate, which drives the lead screw nut 301-15 to perform a translational movement along an axial direction within the guiding groove 301-1101 of the straight guiding rod 301-11. The lead screw nut 301-15 drives the sliding sleeve 301-12 to translate along an axial direction of the outer sleeve 301-16. During the translation process, through a guiding engagement of the helical guiding structure, the sliding sleeve 301-12 drives the outer sleeve 301-16 to rotate around its own rotational axis, thereby achieving a small-angle rotation of the outer sleeve 301-16.

In the second embodiment of the drive mechanism, the helical guiding structure is provided between the sliding sleeve 301-12 and the outer sleeve 301-16, while the axial guiding structure is provided between the sliding sleeve 301-12 and the straight guiding rod 301-11, which can likewise achieve the small-angle rotation of the outer sleeve 301-16 relative to the straight guiding rod 301-11.

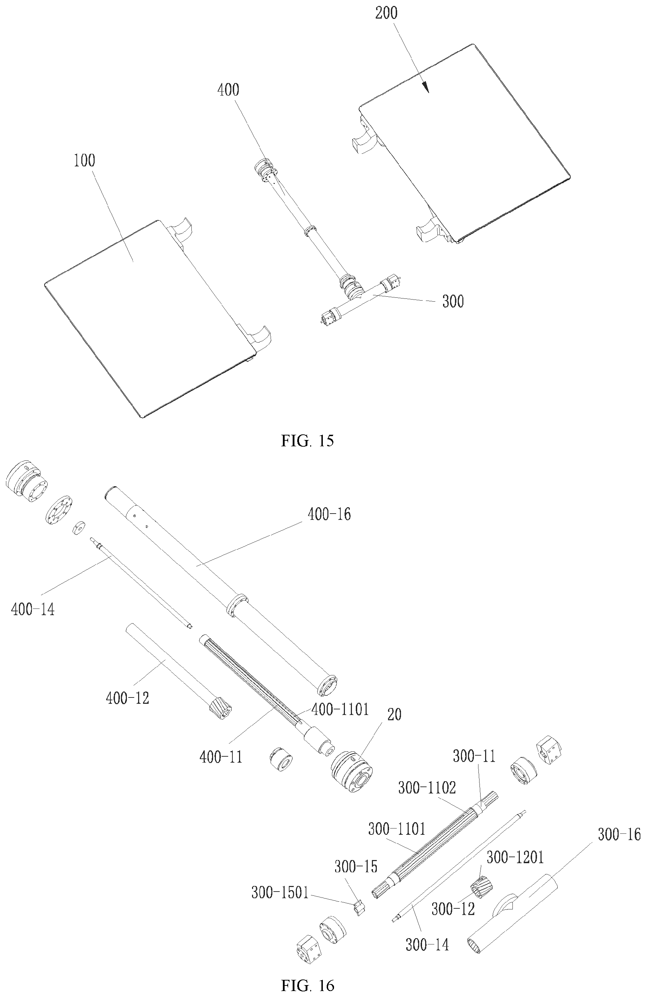

As shown in FIG. 15 and FIG. 16, as a second embodiment of the T-shaped structure of the present disclosure, the first-stage driving mechanism 300 comprises a straight guiding cylinder 300-11, and a lead screw 300-14 is disposed inside the straight guiding cylinder 300-11. A lead screw nut 300-15 is movably sleeved on the lead screw 300-14. A sliding sleeve 300-12 is movably sleeved on an exterior of the straight guiding cylinder 300-11. A housing 300-16 is movably sleeved on an exterior of the sliding sleeve 300-12. The lead screw nut 300-15 is fixedly connected to the sliding sleeve 300-12. A straight guiding groove extending axially is provided on an outer periphery of the straight guiding cylinder 300-11, and a straight guiding protrusion extending axially is provided in an inner hole of the sliding sleeve 300-12, such that an axial guiding structure is formed between the outer periphery of the straight guiding cylinder 300-11 and the inner hole of the sliding sleeve 300-12.

A helical groove is provided on an outer periphery of the sliding sleeve 300-12, and a helical protrusion is provided in an inner hole of the housing 300-16, such that a helical guiding structure is formed between the outer periphery of the sliding sleeve 300-12 and the inner hole of the housing 300-16.

Specifically, an insert 300-1501 is fixedly provided on an exterior of the lead screw nut 300-15. A long guiding slot 300-1101 extending axially is defined in a side portion of the straight guiding cylinder 300-11, and the insert 300-1501 is movably provided within the long guiding slot 300-1101 of the straight guiding cylinder 300-11.

A short guiding slot 300-1201 extending axially is defined in a side portion of the sliding sleeve 300-12, and the insert 300-1501 is fixedly disposed within the short guiding slot 300-1201 of the sliding sleeve 300-12, so as to fixedly connect the insert 300-1501 to the sliding sleeve 300-12, thereby achieving a fixed connection between the lead screw nut 300-15 and the sliding sleeve 300-12.

The housing 300-16 of the first-stage driving mechanism 300 is fixedly connected to one end of a straight guiding rod 400-11 of the second-stage driving mechanism 400 through a connecting component 20, such that the second-stage driving mechanism 400 and the first-stage driving mechanism 300 form a T-shaped structure.

A guiding cylinder 400-12 is movably sleeved on an exterior of the straight guiding rod 400-11. A straight guiding groove 400-1101 extending axially is provided on an outer periphery of the straight guiding rod 400-11, and a straight guiding protrusion extending axially is provided in an inner hole of the guiding cylinder 400-12, such that an axial guiding structure is formed between the outer periphery of the straight guiding rod 400-11 and the inner hole of the guiding cylinder 400-12.

One end of the inner hole of the guiding cylinder 400-12 is movably connected to a lead screw 400-14 via an internal threaded hole. An outer cylinder 400-16 is movably sleeved on an exterior of the guiding cylinder 400-12. A helical groove is provided on an outer periphery of one end of the guiding cylinder 400-12, and a helical protrusion is provided in an inner hole of the outer cylinder 400-16, such that a helical guiding structure is formed between the outer periphery of the one end of the guiding cylinder 400-12 and the inner hole of the outer cylinder 400-16.

The working principle of the second embodiment of the drive mechanism of the present disclosure is as follows:
A power source (such as a motor) drives the lead screw 300-14 of the first-stage driving mechanism 300 to rotate, and the rotation of the lead screw 300-14 drives the lead screw nut 300-15 to perform a translational movement along an axial direction of the lead screw 300-14. The lead screw nut 300-15 drives the sliding sleeve 300-12 to translate along an axial direction of the straight guiding cylinder 300-11 through its insert 300-1501. During the translation process, through a guiding engagement of the helical guiding structure between the sliding sleeve 300-12 and the housing 300-16, the sliding sleeve 300-12 drives the housing 300-16 to rotate around its own rotational axis, thereby achieving a small-angle rotation of the housing 300-16, and further driving the second-stage driving mechanism 400 and the first photovoltaic panel 100 and the second photovoltaic panel 200 connected thereto to rotate as a whole around the rotational axis of the first-stage driving mechanism 300, thereby achieving rotation of the first photovoltaic panel 100 and the second photovoltaic panel 200 around the transverse axis.

Another power source drives the lead screw 400-14 of the second-stage driving mechanism 400 to rotate, and the rotation of the lead screw 400-14 drives the guiding cylinder 400-12 to perform a linear movement along an axial direction. Since a helical guiding structure is provided between the guiding cylinder 400-12 and the outer cylinder 400-16, the guiding cylinder 400-12 drives the outer cylinder 400-16 of the second-stage driving mechanism 400 to rotate relative to the guiding cylinder 400-12 around its own rotational axis during the linear movement, thereby achieving a small-angle rotation of the outer cylinder 400-16. The outer cylinder 400-16 of the second-stage driving mechanism 400 drives the first photovoltaic panel 100 and the second photovoltaic panel 200 to rotate around the rotational axis of the second-stage driving mechanism 400, thereby achieving rotation of the first photovoltaic panel 100 and the second photovoltaic panel 200 around a longitudinal axis.

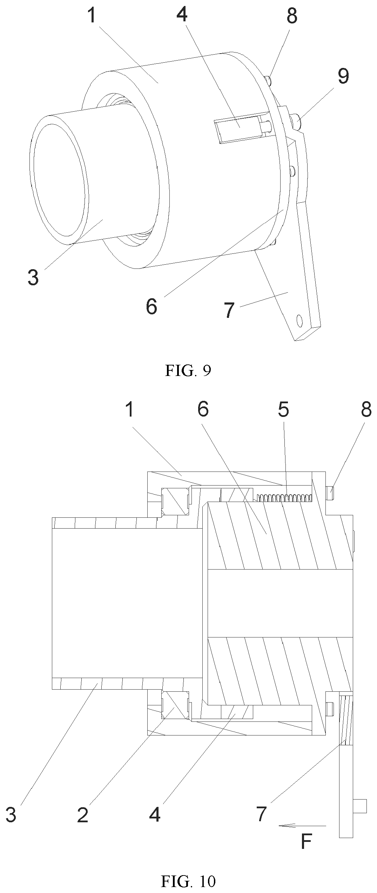

An embodiment of the clutch mechanism of the present disclosure is shown in FIG. 9 to FIG. 11. The clutch mechanism comprises a fixed member 3 and a moving member 4 arranged along the axial direction of the helical rod 11. The fixed member 3 is provided with a protrusion facing the moving member 4, and the moving member 4 is provided with a recess adapted to the protrusion. When the clutch mechanism is in a connected state, the fixed member 3 and the moving member 4 can form a transmission connection through an engagement between the protrusion and the recess.

Specifically, matching connecting teeth are respectively formed on facing ends of the fixed member 3 and the moving member 4. When the clutch mechanism is in a connected state, the fixed member 3 and the moving member 4 can achieve a meshing connection through the connecting teeth.

A housing 1 is sleeved on an exterior of the fixed member 3 and the moving member 4.

An inner end face of the fixed member 3 is connected to the housing 1 through a movable connecting member, such that a relative rotational movement can occur between the fixed member 3 and the housing 1. The movable connecting member may be a bearing 2.

The other end (i.e., the opposite end) of the fixed member 3 extends out of the housing 1. An extending portion of the fixed member 3 is fixedly connected to an output end of the helical rod 11 of the second-stage driving mechanism 301. Rotation of the helical rod 11 of the second-stage driving mechanism 301 can drive the fixed member 3 of the clutch mechanism to rotate.

The moving member 4 and the housing 1 are connected through a guiding structure. Specifically, a lug 4-1 is formed on a side portion of the moving member 4, and a groove 1-1 is defined in the housing 1. The groove 1-1 is adapted to the lug 4-1. The lug 4-1 of the moving member 4 extends into the groove 1-1 of the housing 1, thereby achieving the connection between the moving member 4 and the housing 1.

The other end (i.e., the opposite end) of the moving member 4 is connected to a plurality of uniformly distributed return springs 5; the return springs 5 can provide a restoring force to the moving member 4.

Specifically, one end of the return spring 5 abuts against the other end of the moving member 4, and the other end of the return spring 5 abuts against a flange of the end cap 6.

In the present embodiment, the end cap 6 and the housing 1 are independent components that are detachable; obviously, the end cap 6 and the housing 1 may also be integrated, in which case the return spring 5 is directly connected to the housing 1. Since the fixing manner of the return spring 5 is not the inventive point of the present disclosure, it will not be repeated here.

The moving member 4 is sleeved on the end cap 6, and the end cap 6 maintains the moving member 4 in a coaxial state with the fixed member 3, so as to guide a direction of translational movement of the moving member 4, such that the moving member 4 can only perform movement toward or away from the fixed member 3 without deviating from the axial direction; the flange of the end cap 6 is fixedly connected to the housing 1 through a plurality of bolts 8.

Preferably, a plurality of positioning grooves 6-1 are defined on an outer peripheral surface of the end cap 6, and the return springs 5 are disposed within the positioning grooves 6-1; the positioning grooves 6-1 can guide the return springs 5 to avoid unnecessary deformation of the return springs 5.

Alternatively, a single return spring may also be adopted, such that the return spring is sleeved on an exterior of the end cap 6, which can likewise provide the restoring force to the moving member 4.

It can be understood by those skilled in the art that any elastic member capable of providing the restoring force to the moving member 4 can be used as the return spring; as long as the elastic member is in direct or indirect contact with the moving member 4, the restoring force can be transmitted to the moving member 4.

The end cap 6 is fixedly connected to a fixed end of the lever 7 via bolts 9, thereby achieving a connection between the lever 7 and the moving member 4; the lever 7 extends radially. When a free end of the lever 7 is subjected to a force, it can transmit the force to the end cap 6 and provide a clutch switching force to the moving member 4 via the return spring 5.

When the free end of the lever 7 is subjected to a leftward external force F, the fixed end of the lever 7 can provide a rightward pulling force to the flange of the end cap 6; the end cap 6 transmits the pulling force to the moving member 4 via the return spring 5, causing the moving member 4 to translate rightward along the axial direction, thereby separating the moving member 4 from the fixed member 3 as shown in FIG. 10; when the external force is removed from the free end of the lever 7, the return spring 5 provides a leftward elastic force to the moving member 4, causing the moving member 4 to move leftward, thereby resetting the moving member 4 to restore the meshing connection state with the fixed member 3.

Through an engagement connection between the groove 1-1 and the lug 4-1, the clutch mechanism of the present disclosure enables the housing 1 to perform circumferential positioning on the moving member 4, such that the moving member 4 can only perform a relative translational movement with the housing 1 and cannot perform a circumferential rotational movement relative to the housing 1, thereby preventing the clutch mechanism from affecting a flip angle of the photovoltaic panel.

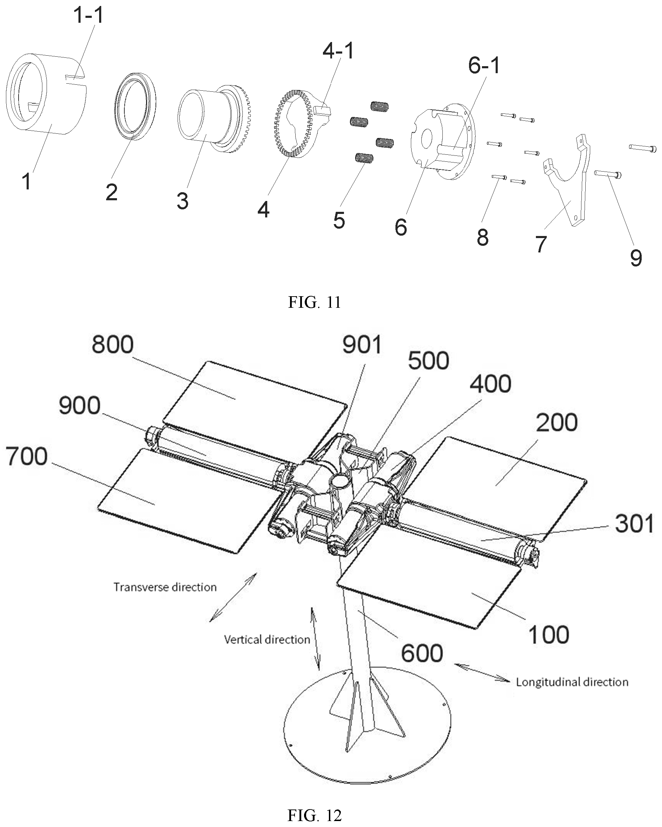

As shown in FIG. 12, a second embodiment of the foldable photovoltaic tracking apparatus of the present disclosure is illustrated. The difference from the first embodiment is that: the other side of the fixed bracket 500 is fixedly connected to a second first-stage driving mechanism 901 extending transversely, and the second first-stage driving mechanism 901 is connected to a second second-stage driving mechanism 900 extending longitudinally; one side of the second second-stage driving mechanism 900 is fixedly connected to an inner side edge of a third photovoltaic panel 700, and the other side of the second second-stage driving mechanism 900 is fixedly connected to an inner side edge of a fourth photovoltaic panel 800.

The connection relationship between the second first-stage driving mechanism 901 and the second second-stage driving mechanism 900 is the same as the connection relationship between the first-stage driving mechanism 400 and the second-stage driving mechanism 301, and the connection relationship between the second second-stage driving mechanism 900 and the third photovoltaic panel 700 and the fourth photovoltaic panel 800 is the same as that between the second-stage driving mechanism 301 and the first photovoltaic panel 100 and the second photovoltaic panel 200, which will not be repeated here.

In the second embodiment of the present disclosure, the first photovoltaic panel 100 and the second photovoltaic panel 200 (i.e., the first photovoltaic panel assembly) are provided on one side of the upright column 600, and the third photovoltaic panel 700 and the fourth photovoltaic panel 800 (i.e., the second photovoltaic panel assembly) are provided on the other side of the upright column 600, such that the first photovoltaic panel assembly and the second photovoltaic panel assembly are respectively provided on two sides of the upright column 600 along the rotational axis of the transverse axis. During the process of the photovoltaic panel assemblies rotating around the transverse axis, the first photovoltaic panel 100 and the second photovoltaic panel 200 will not cause shading to the third photovoltaic panel 700 and the fourth photovoltaic panel 800 regardless of the posture of the photovoltaic panels, and vice versa, thereby enabling each photovoltaic panel to always maintain its maximal light-receiving surface.

Preferably, the rotational axis of the first-stage driving mechanism 400 is parallel to the rotational axis of the second first-stage driving mechanism 901.

Alternatively, even if the rotational axis of the first-stage driving mechanism 400 is not parallel to the rotational axis of the second first-stage driving mechanism 901, as long as the width of the fixed bracket 500 is changed to ensure a sufficient spacing between the first-stage driving mechanism 400 and the second first-stage driving mechanism 901, mutual interference between the first photovoltaic panel assembly and the second photovoltaic panel assembly can be avoided, thereby preventing the power generation efficiency from being affected due to mutual shading between the photovoltaic panels.

The second embodiment of the present disclosure can simultaneously arrange four photovoltaic panels. While increasing the number of photovoltaic panels to improve power generation capacity, it can also balance the forces applied to the upright column.

The working principle of the foldable photovoltaic tracking apparatus of the present disclosure is as follows:
The power source drives the helical rod 11 of the first-stage driving mechanism 400 to perform forward or reverse rotation, driving the second-stage driving mechanism 301 and the first photovoltaic panel 100 and the second photovoltaic panel 200 connected thereto to rotate as a whole around the rotational axis of the first-stage driving mechanism 400, thereby achieving rotation of the first photovoltaic panel 100 and the second photovoltaic panel 200 around the transverse axis.

Another power source drives the helical rod 11 of the second-stage driving mechanism 301 to perform forward or reverse rotation, driving the first photovoltaic panel 100 and the second photovoltaic panel 200 to rotate around the rotational axis of the second-stage driving mechanism 301, thereby achieving rotation of the first photovoltaic panel 100 and the second photovoltaic panel 200 around the longitudinal axis.

By respectively controlling the number of rotations of the lead screws 14 of the first-stage driving mechanism 400 and the second-stage driving mechanism 301 to adjust the rotational angles of the respective helical rods 11, the rotational angles of the first photovoltaic panel 100 and the second photovoltaic panel 200 around the transverse axis and the longitudinal axis can be respectively controlled, thereby achieving precise tracking of the sun.

When encountering strong winds, the first-stage driving mechanism 400 is first driven by the power source to cause the helical rod 11 thereof to rotate forwardly, and the rotational angle of the helical rod 11 of the first-stage driving mechanism 400 is adjusted to rotate the first photovoltaic panel 100 and the second photovoltaic panel 200 to a lowest point, such that the surfaces of the first photovoltaic panel 100 and the second photovoltaic panel 200 are close to the upright column 600.

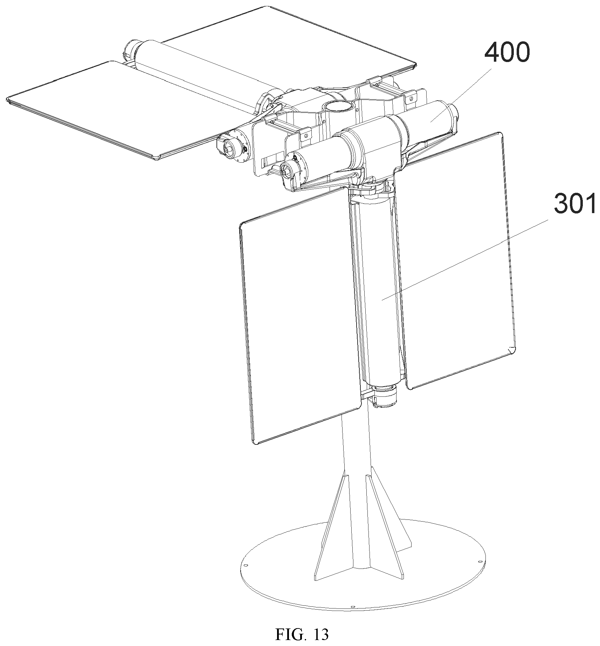

At this time, the trigger member 306 of the second-stage driving mechanism 301 connected to the first photovoltaic panel 100 and the second photovoltaic panel 200 comes into contact with the upright column 600, as shown in FIG. 13. The upright column 600 provides an inward pulling force to the first pull rod 304 and the second pull rod 305 through the trigger member 306. The first pull rod 304 and the second pull rod 305 drive the levers 7 of the first clutch mechanism 302 and the second clutch mechanism 303 to move inward, thereby driving the moving members 4 of the first clutch mechanism 302 and the second clutch mechanism 303 to move in a direction away from the fixed members 3, such that the first clutch mechanism 302 and the second clutch mechanism 303 are in a disengaged state.

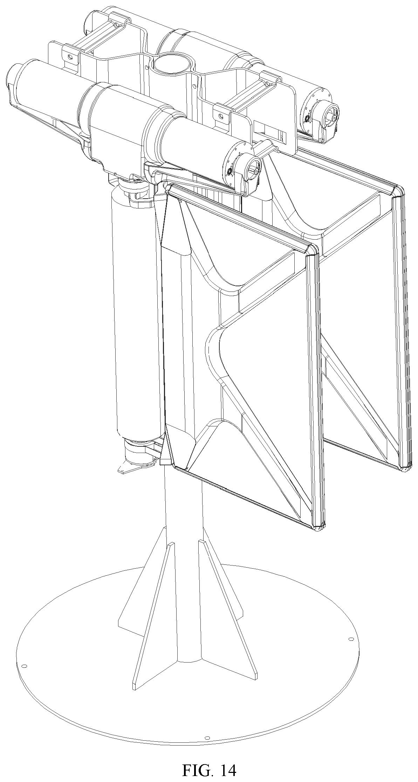

Then, the helical rod 11 of the second-stage driving mechanism 301 is driven by another power source to rotate forwardly. The helical rod 11 of the second-stage driving mechanism 301 drives the fixed members 3 of the first clutch mechanism 302 and the second clutch mechanism 303 as well as the first photovoltaic panel 100 to rotate relative to the moving members 4, causing the first photovoltaic panel 100 to perform a relative rotation with the second photovoltaic panel 200, thereby achieving a flipping action between the two photovoltaic panels. The rotational angle of the helical rod 11 of the second-stage driving mechanism 301 is adjusted to reduce a wind-receiving area of the photovoltaic panels, thereby achieving the folding and retraction of the photovoltaic panels, as shown in FIG. 14.

When sunlight tracking is required, the power source drives the helical rod 11 of the first-stage driving mechanism 400 to rotate in a reverse direction, driving the second-stage driving mechanism 301 and the first photovoltaic panel 100 and the second photovoltaic panel 200 connected thereto to rotate in a reverse direction as a whole around the rotational axis of the first-stage driving mechanism 400, such that the second-stage driving mechanism 301 and the first photovoltaic panel 100 and the second photovoltaic panel 200 move away from the upright column 600. When the second-stage driving mechanism 301 moves away from the upright column 600, the triggering portion 3062 of the trigger member 306 loses the reaction force from the upright column 600, the external force applied to the first pull rod 304 and the second pull rod 305 disappears, and the moving members 4 of the first clutch mechanism 302 and the second clutch mechanism 303 return to their original positions, such that the first clutch mechanism 302 and the second clutch mechanism 303 are in a connected state.

At this time, the first photovoltaic panel 100 and the second photovoltaic panel 200 are in a fixedly connected state. By driving the helical rod 11 of the second-stage driving mechanism 301 to rotate in a forward or reverse direction via another power source, the second-stage driving mechanism 301 can drive the fixed members 3 and the moving members 4 to rotate synchronously, thereby driving the first photovoltaic panel 100 and the second photovoltaic panel 200 to rotate synchronously.

The fixed member 3 of the present disclosure can rotate driven by the second-stage driving mechanism 301, such that a circumferential rotation occurs between the fixed member 3 and the moving member 4, thereby driving the first photovoltaic panel 100 to perform a flipping action relative to the second photovoltaic panel 200. Since the flipping angle of the first photovoltaic panel 100 is completely determined by the rotational angle of the second-stage driving mechanism 301, the flipping angle of the photovoltaic panel can be precisely controlled in the present disclosure.

During the movement of the photovoltaic panel of the present disclosure, once the trigger member 306 contacts any object (such as the upright column 600), the clutch mechanism can be triggered. Therefore, the folding action of the present disclosure can be triggered automatically. The triggering of the clutch mechanism of the present disclosure does not rely on sensors, which can reduce the cost of the clutch mechanism.

In the first embodiment and the second embodiment of the foldable photovoltaic tracking apparatus of the present disclosure, the housing 16 of the first-stage driving mechanism 400 is fixedly connected to the fixed bracket 500, the helical rod 11 of the first-stage driving mechanism 400 is fixedly connected to the housing 16 of the second-stage driving mechanism 301, and the helical rod 11 of the second-stage driving mechanism 301 is fixedly connected to the photovoltaic panels; that is, the housings 16 of the first-stage driving mechanism 400 and the second-stage driving mechanism 301 are respectively used as the fixed members, and the helical rods 11 are used as the rotating members. Obviously, the helical rods 11 of the first-stage driving mechanism 400 and the second-stage driving mechanism 301 may also be used as the fixed members, while the housings 16 are used as the rotating members, which can likewise achieve the rotation of the photovoltaic panels around the transverse axis and the longitudinal axis.

Obviously, various modifications and variations can be made to the present disclosure by those skilled in the art without departing from the spirit and scope of the present disclosure. Thus, if these modifications of the present disclosure fall within the scope of the claims of the present disclosure and their equivalent technologies, the present disclosure is also intended to include these modifications and variations.

## Claims

1. A foldable dual-axis tracking photovoltaic support, comprising:
a fixed bracket;
a first-stage driving mechanism, wherein a fixed member and a rotating member of the first-stage driving mechanism are rotatable relative to each other; the fixed member of the first-stage driving mechanism is fixedly connected to the fixed bracket; and
a second-stage driving mechanism, wherein a fixed member and a rotating member of the second-stage driving mechanism are rotatable relative to each other; the fixed member of the second-stage driving mechanism is fixedly connected to the rotating member of the first-stage driving mechanism, and the rotating member of the second-stage driving mechanism is configured to be fixedly connected to a photovoltaic panel;
wherein a rotational axis of the first-stage driving mechanism extends transversely; and a rotational axis of the second-stage driving mechanism extends longitudinally;
wherein the first-stage driving mechanism and/or the second-stage driving mechanism further comprises an intermediate member, the intermediate member is movably connected to the rotating member, and a guiding connection is established between the intermediate member and the rotating member via a first guiding structure; the intermediate member is movably connected to the fixed member,and a guiding connection is established between the intermediate member and the fixed member via a second guiding structure.

2. The foldable dual-axis tracking photovoltaic support according to claim 1, wherein the fixed member is a housing, and the rotating member is a helical rod; or, the fixed member is a helical rod, and the rotating member is a housing; and the intermediate member is a sliding sleeve.

3. The foldable dual-axis tracking photovoltaic support according to claim 1, wherein the first guiding structure is a helical guiding structure, and the second guiding structure is an axial guiding structure; or, the first guiding structure is an axial guiding structure, and the second guiding structure is a helical guiding structure.

4. The foldable dual-axis tracking photovoltaic support according to claim 2, wherein the first-stage driving mechanism and/or the second-stage driving mechanism further comprises:
a driven member, fixedly connected to the sliding sleeve; and
a driving member, connected to a power source; wherein driven by the power source, the driving member drives the driven member, and is capable of driving the sliding sleeve to perform linear movement along an axial direction of the helical rod.

5. The foldable dual-axis tracking photovoltaic support according to claim 3, wherein a helical angle of the helical guiding structure does not exceed 40 degrees.

6. The foldable dual-axis tracking photovoltaic support according to claim 3, wherein a helical angle of the helical guiding structure is greater than 5 degrees and less than 25 degrees.

7. The foldable dual-axis tracking photovoltaic support according to claim 4, wherein the driving member is a lead screw, and the driven member is a lead screw nut; wherein rotation of the lead screw drives the lead screw nut and the sliding sleeve to translate along an axial direction of the helical rod, causing relative rotation between the helical rod and the sliding sleeve, thereby achieving relative rotation between the helical rod and the housing.

8. The foldable dual-axis tracking photovoltaic support according to claim 2, wherein the sliding sleeve defines a through hole, and the sliding sleeve is sleeved on the helical rod via the through hole;wherein the helical guiding structure comprises a helical groove provided on an inner wall of the through hole, and a helical protrusion provided on an outer peripheral surface of the helical rod;
or, the helical guiding structure comprises a helical protrusion provided on an inner wall of the through hole, and a helical groove provided on an outer peripheral surface of the helical rod;
or, the helical guiding structure comprises a first helical groove provided on an inner wall of the through hole, a second helical groove provided on an outer peripheral surface of the helical rod, and a plurality of balls provided between the first helical groove and the second helical groove.

9. The foldable dual-axis tracking photovoltaic support according to claim 2, wherein a first axial guiding structure extending axially is formed on an outer peripheral surface of the sliding sleeve, and a second axial guiding structure adapted to the first axial guiding structure is provided on the housing; wherein the first axial guiding structure and the second axial guiding structure constitute the axial guiding structure between the sliding sleeve and the housing.

10. The foldable dual-axis tracking photovoltaic support according to claim 9, wherein the first axial guiding structure is a guiding protrusion, and the second axial guiding structure is a guiding groove;
or, the first axial guiding structure is a guiding groove, and the second axial guiding structure is a guiding protrusion;
or, the axial guiding structure further comprises an intermediate member, wherein the first axial guiding structure and the second axial guiding structure are both guiding grooves, and the intermediate member of the axial guiding structure is provided between the first axial guiding structure and the second axial guiding structure, forming a guiding engagement via the intermediate member of the axial guiding structure.

11. The foldable dual-axis tracking photovoltaic support according to claim 1, wherein two sets of first-stage driving mechanisms are provided, and the two first-stage driving mechanisms are fixedly provided on two sides of the fixed bracket, respectively.

12. The foldable dual-axis tracking photovoltaic support according to claim 11, wherein rotational axes of the two sets of the first-stage driving mechanisms are parallel to each other.

13. The foldable dual-axis tracking photovoltaic support according to claim 1, further comprising: an upright column, fixedly connected to the fixed bracket; wherein the upright column extends vertically.

14. The foldable dual-axis tracking photovoltaic support according to any one of claims 1-13, further comprising a clutch mechanism, wherein the clutch mechanism is fixedly connected to an output end of the second-stage driving mechanism, and the clutch mechanism is configured to be fixedly connected to the photovoltaic panel;
wherein the clutch mechanism comprises a clutch mechanism fixed member and a clutch mechanism moving member arranged opposite to each other; under an action of an external force, the clutch mechanism moving member is capable of moving relative to the clutch mechanism fixed member, causing a switching of a clutch state of the clutch mechanism.

15. The foldable dual-axis tracking photovoltaic support according to claim 14, wherein the clutch mechanism further comprises:
a lever, wherein one end of the lever is connected to the moving member, and the other end is a free end; wherein when the free end of the lever is subjected to a force, it is capable of providing the external force to the moving member.

16. The foldable wind-resistant dual-axis tracking photovoltaic support according to claim 15, wherein the clutch mechanism further comprises an elastic member, and the elastic member is connected to the moving member; wherein when the external force disappears, the elastic member is capable of providing a restoring force to the moving member.

17. A foldable dual-axis tracking photovoltaic apparatus, comprising the foldable dual-axis tracking photovoltaic support according to any one of claims 1 to 16 and a photovoltaic panel, wherein the second-stage driving mechanism of the dual-axis tracking photovoltaic support is connected to the photovoltaic panel;
wherein when the rotating member of the first-stage driving mechanism rotates relative to the fixed member thereof, it is capable of driving the second-stage driving mechanism and the photovoltaic panel fixedly connected thereto to rotate around the rotational axis of the first-stage driving mechanism, thereby achieving rotation of the photovoltaic panel around a transverse axis;
wherein when the rotating member of the second-stage driving mechanism rotates relative to the fixed member thereof, it is capable of driving the photovoltaic panel to rotate around the rotational axis of the second-stage driving mechanism, thereby achieving rotation of the photovoltaic panel around a longitudinal axis.
